# EUROPÄISCHE PATENTANMELDUNG

(11) **EP 1 674 737 A1**
(43) Veröffentlichungstag der Anmeldung: **28.06.2006**
(21) Anmeldenummer: 05027143.6
(22) Anmeldetag: 13.12.2005
(51) Int. Cl.: F16B 7/04

(54) **Mehrarmiger Rohrverbinder**

(30) Priorität: 23.12.2004 DE 102004063465
(71) Anmelder: Murjahn, Wolfgang, 40822 Mettmann (DE)
(72) Erfinder: Murjahn, Wolfgang, 40822 Mettmann (DE)

(57) **Zusammenfassung**

Ein mehrarmiger Rohrverbinder ist zur Herstellung von Regalen, Tischen oder Gondeln aus Rohren (1) vorgesehen. Sie werden in Ladengeschäften oder Wohnungen eingesetzt.

Der Rohrverbinder besteht aus einem Grundkörper (8) und einem oder mehreren Spannkörpern (6). Die Arme (3) der Grund- und Spannkörper (6,8) werden mit den Spannsegmenten (4,5) in die Rohre (1) eingesteckt. Durch Anziehen eines Spannelementes, z.B. einer Spannschraube (7) werden Grund- und Spannkörper (6,8) gegeneinander verspannt und ihre Spannsegmente (4,5) im Inneren der Rohre (1) verklemmt.

Grund- und Spannkörper (6,8) bilden miteinander einen Zentralkörper (2) sowie mehrere Arme (3). In Endstellung sind die Rohre (3) durch Fortsatzbereiche (9,9') der Arme vom Zentralkörper (2) beabstandet derart, daß zwischen den Enden der Rohre (1) ein Schlüssel zum Anziehen der Spannschraube (7) eingeführt werden kann.

Der Rohrverbinder ermöglicht elegante Rohrgestelle aus filigranen Rohren (1), da die Spannschraube (7) im Inneren des Verbinders verborgen angeordnet ist und der Rohrverbinder die Aussenform des Rohres (1) in eleganter Weise aufnimmt und fortsetzt. Da an den Rohren keine besonderen Öffnungen oder Kerben zur Einführung des Spannschlüssels erforderlich sind, müssen die Rohre (1) lediglich durch einen geraden Schnitt abgelängt werden. Derartige Rohrgestelle sind unabhängig von festen Rastermaßen mit einfachen Mitteln vor Ort herstellbar.

## Beschreibung

Die Erfindung betrifft einen mehrarmigen Rohrverbinder, wie er insbesondere zur Herstellung von Rohrgestellen, beispielsweise Regalen, Tischen oder Gondeln für die Einrichtung von Ladengeschäften oder von Wohnungen häufig verwendet wird. Vorzugsweise werden dabei Rohre von kleinem Querschnitt verwendet, um dem Rohrgestell ein leichtes und filigranes Aussehen zu verleihen.

### Derartige Rohrverbinder sind an sich bekannt.

Ein solcher Rohrverbinder wird in mehreren Ausführungen in der im Juni 2002 aufgelegten Arbeitsmappe der Phillips System GmbH & Co. KG in Mettmann auf der ersten Seite von Fach 10 unter der Überschrift "Vierkant-System" beschrieben. Dieser Rohrverbinder weist Arme auf, welche gegenüber dem Innenmaß des Rohres ein gewisses Übermaß haben. Zum Zusammenbau des Rohrgestells werden die Arme mit einem Hammer in das Ende des Rohres getrieben, so dass sie dort unter Verformung des Rohres einen Presssitz bilden. Auf diese Weise können höchst filigrane Rohre und Rohrverbinder ausgebildet werden. Ausserdem können die Rohre ohne weitere Bearbeitung der Enden eingebaut werden. Zur Herstellung von Rohrgestellen in unterschiedlichen Abmessungen ist es nämlich häufig erforderlich, die in Fixlängen angelieferten Rohre auf der Baustelle abzulängen und die abgelängten Rohre ohne weitere Bearbeitung mit Spezialmaschinen einzubauen.

Nachteilig ist jedoch, dass bei der Montage erhebliche Kräfte zur Herstellung des Presssitzes aufgebracht werden müssen. Weiterhin ist nachteilig, dass beispielsweise bei der Herstellung von Glasvitrinen oder Regalen mit Glasböden das stossempfindliche Glas erst nach vollständigem Zusammenbau des Rohrgestells eingebaut werden kann.

Andere Rohrverbinder sind bekannt, bei denen die Arme aus zwei Segmenten bestehen. Bei diesen Rohrverbindern werden die Arme in die Enden des Rohres eingeführt und mit Hilfe eines zwischen den beiden Segmenten angeordneten Spannelementes auseinander gespreizt. Die gespreizten Teile der Arme sitzen in einem reibschlüssigen Klemmsitz innerhalb der Enden der Rohre.

Als Spannelement wird häufig eine Schraube verwendet, so dass der Zusammenbau der Rohrgestelle mit üblichen Schraubwerkzeugen, beispielsweise einem Schraubendreher oder einem Schraubschlüssel ohne großen Kraftaufwand erfolgen kann. Auch stossempfindliche Materialien, beispielsweise Glas, werden durch den Zusammenbau nicht beschädigt. Nachteilig ist jedoch, dass zur Betätigung des Spannelementes eine Öffnung oder eine Kerbe o. ä. im Bereich der Enden der Rohre vorgesehen werden muss. Dadurch ist es nicht möglich, die Rohre auf der Baustelle in den benötigten Abmessungen abzulängen, da für die Herstellung der Öffnung Spezialmaschinen - beispielsweise Exzenterpressen - erforderlich sind. Bei der Verwendung derartiger Rohrverbinder im Rahmen von Baukastensystemen aus vorgefertigten Komponenten müssen die Rohre daher in vorher festgelegten Rasterlängen angeliefert werden.

Aufgrund des für das Spannelement im Inneren des Rohres erforderlichen Platzes sind derartige Rohrverbinder für Rohre von kleinem Querschnitt auch weniger geeignet.

Der Erfindung liegt die Aufgabe zugrunde, einen gattungsgemäßen Rohrverbinder zu schaffen zur montagegünstigen Verbindung von vorzugsweise kleinen und filigranen Rohren unterschiedlicher Länge ohne weitere Bearbeitung. Derartige Rohrverbinder eignen sich mit den zugehörigen Rohren auch zur Bildung eines Baukastensystems aus vorgefertigten Komponenten für die Herstellung von Rohrgestellen mit unterschiedlichen Abmessungen ohne auf vorgegebene Rastermaße eingeschränkt zu sein.

Gelöst wird die Aufgabe durch die in den Ansprüchen angegebene Erfindung, wobei alle Ansprüche grundsätzlich eigenständige Lösungen beanspruchen und jeder Anspruch mit jedem anderen Anspruch kombinierbar ist.

Der Anspruch 1 sieht zunächst und im Wesentlichen vor, dass jeder Arm in Längsrichtung geteilt ist in ein erstes, insbesondere festes und ein zweites, insbesondere bewegliches Spannsegment. Der Arm ist in ein Rohr einsteckbar, wobei die Spannsegmente dort in der Art von Spannbacken verklemmbar sind. Das erste Spannsegment kann einstückig und materialeinheitlich mit Teilen des Zentralkörpers zu einem Grundkörper verbunden sein. Die zweiten Spannsegmente können von zwei oder drei benachbarten Armen sowie eventuell mit Teilen des Zentralkörpers einstückig und materialeinheitlich zu einem Spannkörper verbunden sein. Mit einem Spannelement kann der Spannkörper gegen den Grundkörper verspannt werden, wobei jeder Arm einen Fortsatzbereich aufweist. Dieser Fortsatzbereich ist wesentlich. Er erstreckt sich über beide Spannsegmente. Im Fortsatzbereich befindet sich eine Öffnung. Diese Öffnung enthält das Spannelement. Die Öffnung ist einem Werkzeug für die Betätigung des Spannelementes zugänglich. Die zwei oder mehr Spannsegmente, die einen Arm ausbilden, können in die Öffnung eines Rohres eingesteckt werden. Dies ist ohne Kraftaufwand möglich. Wenn alle Arme in die ihnen zugeordneten Öffnungen von Rohren eingesteckt sind, wird das Spannelement betätigt. Dann legen sich die Spannsegmente gegen die Innenwände der Rohre an, und verspannen sich dort. Die Aussenflächen der Fortsatzbereiche der Spannsegmente entsprechen dabei bis auf Spalten zwischen den Spannsegmenten oder der Betätigungsöffnung der Aussenumrisskontur des Rohres. Es ist eine unterbrechungsfreie fluchtende Oberfläche gegeben, die sich vom Rohr bis zum Zentralkörper erstreckt.

Der Anspruch 2 sieht zunächst und im Wesentlichen vor, dass das Spannelement in einem inneren Winkelscheitel zweier oder mehrerer Arme angeordnet ist. Bei dem Winkel kann es sich um einen ebenen Winkel handeln, wenn das Spannelement lediglich zwei Arme aufweist. Bei dem Winkel kann es sich um einen Raumwinkel handeln, wenn das Spannelement drei Spannsegmente aufweist, die jeweils in eine andere Raumrichtung weisen. Durch Betätigung dieses Spannelementes werden die Spannsegmente dieser Arme in die Klemmstellung verbracht. Zufolge der Anordnung des Spannelementes im Zwickel oder Eckbereich zwischen zwei einander benachbarten Armen ist dieses an einer sehr unauffälligen Stelle angebracht, so dass es auf den ersten Blick nicht auffällt. In einer Weiterbildung der Erfindung ist vorgesehen, dass jeder Arm aus je einem Fortsatz des kubusförmigen Grundkörpers unter Ausbildung einer Stufe entspringt. Der kubusförmige Grundkörper setzt sich in Richtung der Arme um ein gewisses Maß fort. Die Umrisskontur der Fortsätze entspricht im Wesentlichen der Umrisskontur der auf die Arme aufsteckbaren Rohre, so dass die Stufe etwa der Materialstärke des Rohres entspricht. Durch die Ausbildung dieser Fortsätze wird der Platz für das Spannelement geschaffen. Es brauchen also keine Öffnungen in die Rohre eingebracht zu werden, damit das Spannelement betätigt werden kann, da die Rohre mit ihren Stirnkanten gegen die von den Fortsätzen gebildeten Stufen treten. In einer bevorzugten Ausgestaltung der Erfindung ist das Spannelement als Madenschraube ausgebildet. Die zugehörige Gewindebohrung erstreckt sich zwischen zwei oder drei einander benachbarten Armen. Bei einem zweischenkligen Rohrverbinder liegt die Gewindebohrung in der Mitte einer im Zwickel zwischen den beiden Armen verlaufenden Kante. Bei einem dreischenkligen Rohrverbinder liegt die Gewindebohrung vorzugsweise im Eckbereich. Die Höhe der Stufe kann an den Durchmesser der Gewindebohrung angepaßt sein. Der Öffnungsrand der Gewindebohrung soll zwischen den den jeweiligen Fortsatz begrenzenden Kanten der Stufen liegen. Ferner ist vorgesehen, dass jeder der beiden Arme einen U-förmigen Schacht ausbilden kann. Die beiden Schächte können miteinander fluchten, so dass in diesen winkelförmigen U-förmigen Schacht ein L-förmiger Spannkörper eingelegt werden kann, der mit seinen L-Schenkeln die Spannsegmente ausbildet. Das Spannelement, also insbesondere die Madenschraube sitzt dann in dem von den beiden L-Schenkeln gebildeten Zwickel. Auch die beiden L-Schenkel können Stufen ausbilden. Insbesondere besitzen sie ein quadratisches Profil und liegen mit Abstand zu den Schachtwänden des Schachtes im Schacht ein. Die beiden vom L-förmigen Spannkörper ausgebildeten Stufen, deren Kanten gegebenenfalls die Gewindebohrung tangieren können, sind niedriger als die entsprechenden Stufen des Grundkörpers. In einer Weiterbildung ist vorgesehen, dass der Rohrverbinder drei oder mehr jeweils in einem vorzugsweise rechten Winkel zueinander vom Grundkörper abragende Arme aufweist. Der Spannkörper kann in diesem Falle ein dreischenkliger Körper sein. Die Schenkel dieses dreischenkligen Spannkörpers bilden die Spannsegmente aus und stehen senkrecht aufeinander. Jeder Schenkel liegt vorzugsweise in einer L-förmigen Schale ein, die jeweils von einem Arm gebildet wird. Das Spannelement liegt bei dieser Ausgestaltung vorzugsweise im Kreuzungspunkt der Scheitellinien der einen dreischenkligen Querschnitt aufweisenden Spannsegmente. Zufolge dieser Form ist eine stabile Spannkörperform gegeben. Die Spannsegmente bilden dabei senkrecht zueinander stehende Spannflächen aus, so dass eine prismatische Spanneinrichtung gegeben ist. Zwischen der Basisfläche der im Querschnitt dreieckigen Spannbacke und dem inneren Scheitel der Armschale befindet sich ein dreieckiger Freiraum. Die Spitze der Madenschraube stützt sich vorzugsweise in einem inneren Scheitel des Grundkörpers ab. Die Gewindebohrung schneidet dabei den würfelförmigen Grundkörper diagonal. Befindet sich die Gewindebohrung in einem Eckbereich, so ist vorgesehen, dass sich die Spitze der Madenschraube in der dieser Ecke diagonal gegenüberliegenden Innenecke des Grundkörpers abstützt.

Die erfindungsgemäßen Rohrverbinder umfassen nicht nur solche mit zwei oder drei Armen. Es sind auch solche Rohrverbinder möglich, die vier oder mehr Arme aufweisen. Liegen vier Arme in einer gemeinsamen Ebene, so werden bevorzugt zwei L-förmige Spannkörper verwendet, die sich gegeneinander abstützen können. Dabei kann das Widerlager für das Spannelement eines Spannkörpers eine rückwärtige Fläche des anderen Spannkörpers sein. Bei einem vierarmigen Rohrverbinder, bei dem die einzelnen Arme nicht in einer Ebene liegen, ist vorzugsweise vorgesehen, dass zwei Spannkörper dreiarmig ausgebildet sind, wobei die Arme jedes Spannkörpers rechtwinklig aufeinander stehen. Bei dieser Ausgestaltung können zwei feste Spannsegmente des Grundkörpers L-förmig ausgebildet sein. Zwei andere feste Spannsegmente des Grundkörpers können T-förmige Querschnittskonturen aufweisen. Die zugehörigen Arme besitzen dann zwei bewegliche Spannsegmente, wobei jedes bewegliche Spannsegment einem anderen Spannkörper zugeordnet ist. In entsprechender Weise sind auch Rohrverbinder möglich, die sechs Arme aufweisen. In diesem Falle besitzt der Grundkörper vorzugsweise nur feste Spannsegmente, die eine L-förmige Querschnittskontur aufweisen. Die zugeordneten beweglichen Spannsegmente können eine dreieckige Querschnittskontur aufweisen. Die Spannkörper können drei Spannsegmente besitzen, die jeweils rechtwinklig aufeinander stehen. Auch bei diesem Ausführungsbeispiel stützen sich zwei Spannkörper gegeneinander ab.

Rohrverbinder mit mehreren, voneinander getrennten Spannkörpern betreffen einen eigenständigen technischen Lösungsweg. Es wird in diesem Zusammenhang insbesondere als wesentlich erachtet, wenn zwei Spannsegmente verschiedene Spannkörper zusammen mit einem festen Spannsegment einen Arm ausbilden. Gleichfalls wird es als von besonderer Bedeutung angesehen, wenn sich bewegliche Spannelemente gegenseitig unter Zuhilfenahme des Spannelementes verspannen lassen. Ungeachtet der Ausgestaltung und der Lage des Spannelementes ist deshalb vorgesehen, dass zwei bewegliche Spannkörper in Bezug auf einen festen Grundkörper mit nur einem Spannelement in eine Spannstellung bringbar sind.

Die Erfindung betrifft darüber hinaus ein System wie einen Baukasten bestehend aus einer Vielzahl unterschiedlicher Rohrverbinder, wie sie oben beschrieben wurden und einer Vielzahl von dazu passenden Rohren, wobei es sich vorzugsweise um Rohre mit einem quadratischen Querschnitt handelt. Die Rohre können unterschiedliche Längen aufweisen. Es ist aber besonders bevorzugt, dass die Rohre gleich lang sind, da sie problemlos im Bedarfsfall abgelängt werden können, um mit einem oder mehreren der oben beschriebenen Rohrverbinder miteinander zu Warenträgern, Regalen oder dergleichen verbunden werden zu können. Wesentlich ist, dass die Rohre durch ledigliches Ablängen, also durch einen glatten Schnitt präparierbar sind. Zusätzliche Massnahmen sind nicht erforderlich.

Ausführungsbeispiele der Erfindung werden nachfolgend anhand beigefügter Zeichnungen näher erläutert. Es zeigen:
- Fig.1: in einer perspektivischen Darstellung ein erstes Ausführungsbeispiel der Erfindung, wobei der Rohrverbinder im Wesentlichen L-förmig ausgebildet ist und zwei Rohre miteinander verbindet;
- Fig. 2: das erste Ausführungsbeispiel in einer Darstellung gemäß Fig.1 ohne Rohre;
- Fig. 3: den Grundkörper 8 des ersten Ausführungsbeispiels in einer perspektivischen Darstellung;
- Fig. 4: den Spannkörper 6 des ersten Ausführungsbeispiels in einer perspektivischen Darstellung;

- Fig. 5: ein zweites Ausführungsbeispiel der Erfindung, wobei der Rohrverbinder drei in Ebene liegende Rohre 1 miteinander verbindet;
- Fig. 6: den in der Fig. 5 dargestellten Rohrverbinder ohne Rohre;
- Fig. 6a: einen ersten Spannkörper 6 des in der Fig. 6 dargestellten Rohrverbinders;
- Fig. 6b: den zweiten Spannkörper 6 des in der Fig. 6 dargestellten Rohrverbinders;
- Fig. 7: die beiden in den Fig. 6a und 6b dargestellten Spannkörper einander zugeordnet;
- Fig. 8: den Grundkörper 8 des zweiten Ausführungsbeispiels;
- Fig. 9: ein drittes Ausführungsbeispiel in einer perspektivischen Darstellung, bei dem der Rohrverbinder vier in einer Ebene liegende Rohre 1 miteinander verbindet;
- Fig.10: den in der Fig. 9 dargestellten Rohrverbinder ohne Rohre;
- Fig. 11: den Grundkörper 8 des in den Fig. 9 und 10 dargestellten Rohrverbinders;
- Fig.11a: den Grundkörper gemäß Fig.11 in einer anderen perspektivischen Darstellung;

- Fig.12: die beiden Spannkörpers 6 des in den Fig. 9 und 10 dargestellten Rohrverbinders;
- Fig. 13: ein viertes Ausführungsbeispiel eines Rohrverbinders, welcher drei nicht in einer Ebene liegende Rohre 1 miteinander verbindet;
- Fig. 14: den in Fig. 13 dargestellten Rohrverbinder ohne Rohre;
- Fig. 15: den Spannkörper 6 des in den Fig.13 und 14 dargestellten Rohrverbinders;
- Fig. 16: den Grundkörper 8 des in den Fig.13 und 14 dargestellten Rohrverbinders;
- Fig. 17: ein fünftes Ausführungsbeispiel eines Rohrverbinders, welcher vier nicht in einer Ebene liegende Rohre 1 miteinander verbindet;
- Fig.18: den in der Fig.17 dargestellten Rohrverbinder ohne Rohre;
- Fig.19: den Spannkörper 6 des in den Fig.16 und 18 dargestellten Rohrverbinders;
- Fig. 20: den Grundkörper 8 des in den Fig. 17 und 18 dargestellten Rohrverbinders;
- Fig. 21: ein sechstes Ausführungsbeispiel eines Rohrverbinders, welcher sechs Rohre miteinander verbindet;
- Fig. 22: den in Fig. 21 dargestellten Rohrverbinder ohne Rohre;

- Fig. 23: eine Darstellung gemäß Fig. 22, jedoch um 90° geschwenkt;
- Fig. 23a: eine weitere Darstellung gemäß Fig. 22, jedoch auf dem Kopf stehend;
- Fig. 24: die beiden Spannkörper 6 des in den Fig. 21 und 22 dargestellten Rohrverbinders und
- Fig. 25: den Grundkörper 8 des in den Fig. 21 und 22 dargestellten Rohrverbinders.

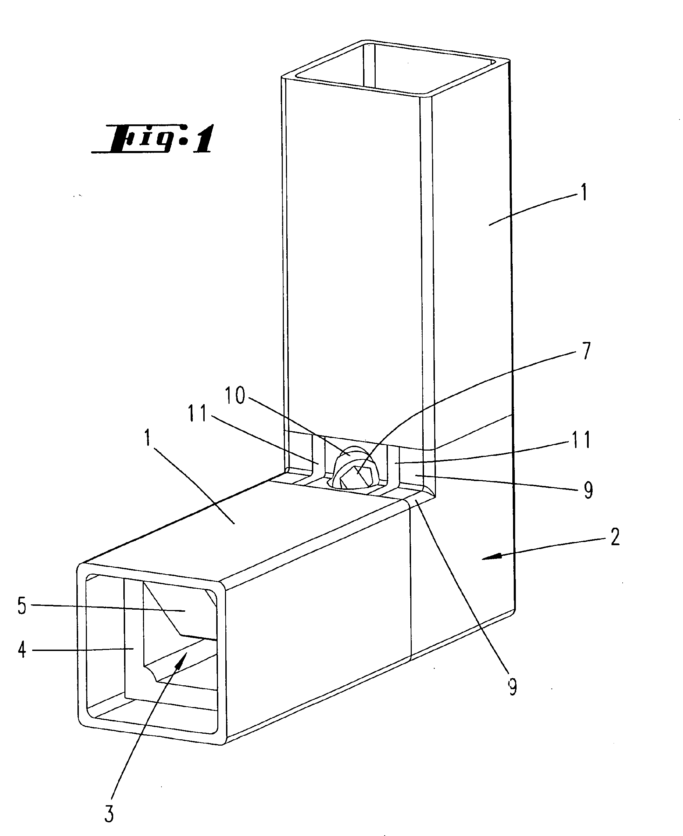

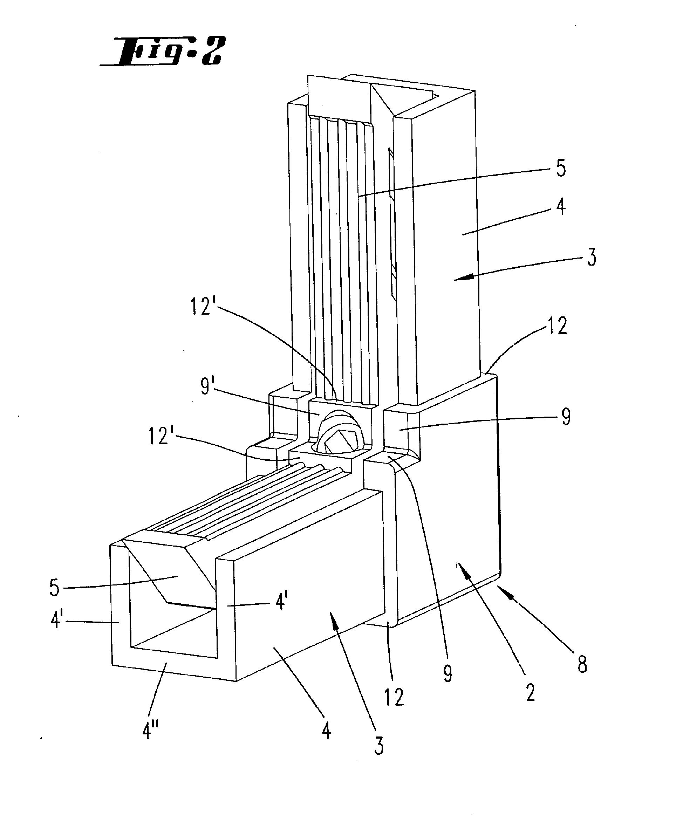

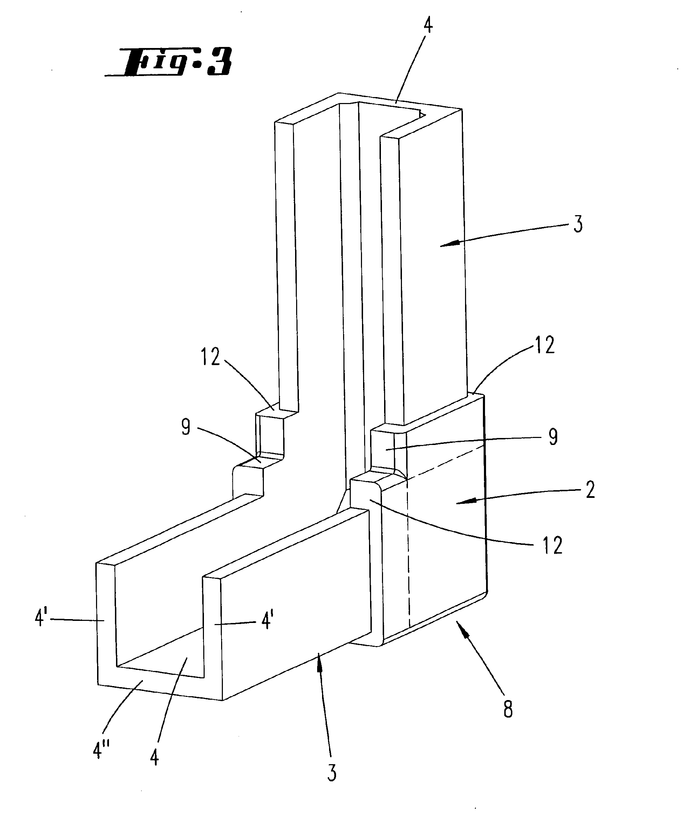

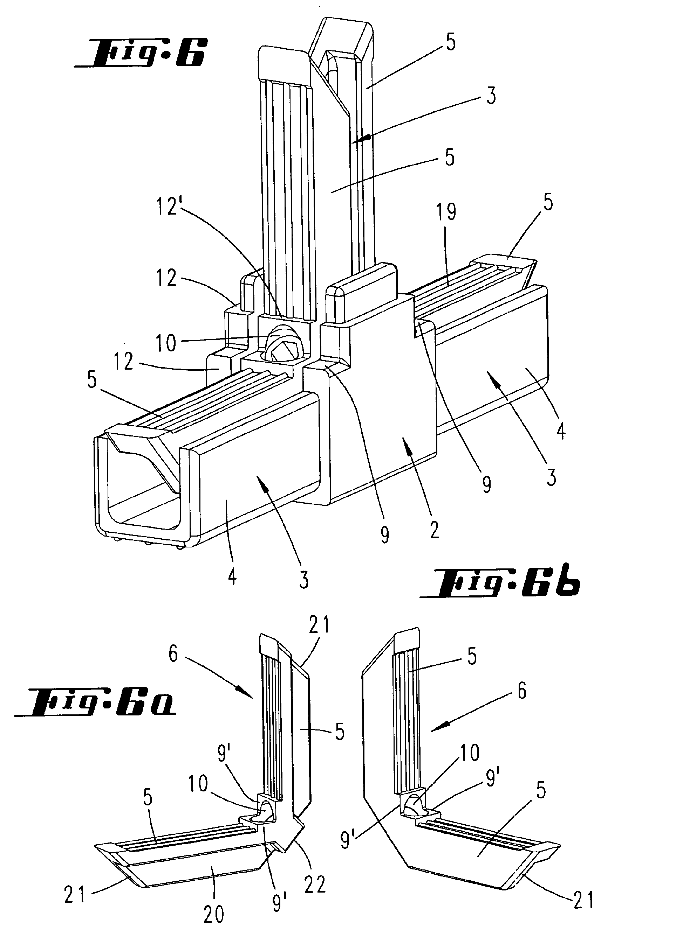

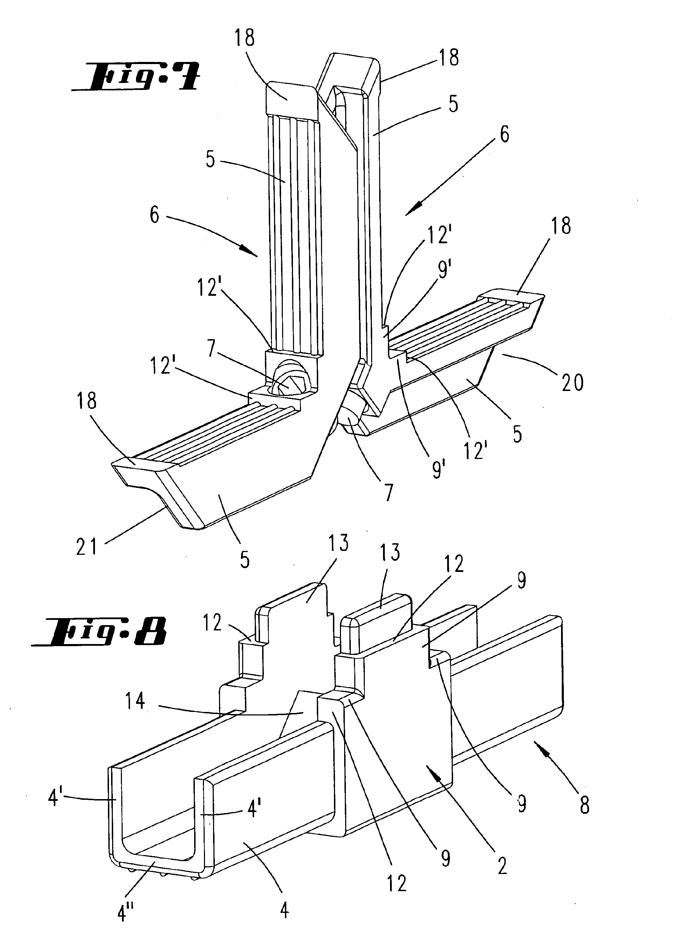

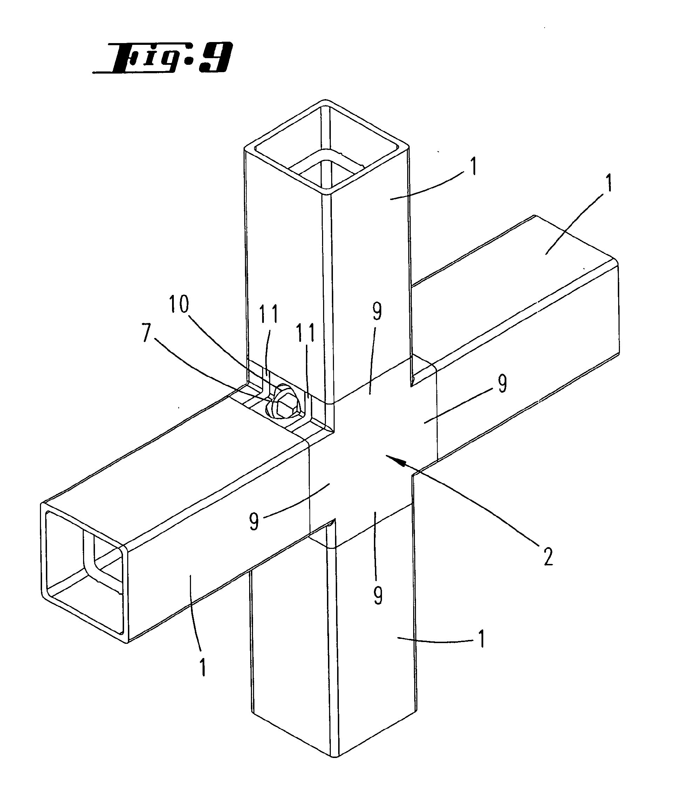

Der in den Figuren 1 bis 4 dargestellte Rohrverbinder dient der Verbindung zweier senkrecht aufeinander stehender Rohre 1, die einen quadratischen Querschnitt haben. Der Rohrverbinder besitzt einen Grundkörper 8 (vergleiche Figur 3) und einen Spannkörper 6 (vergleiche Figur 4). Der Grundkörper 8 besitzt einen Zentralkörper 2, der im Wesentlichen die Aussenumrisskontur eines Kubus hat. Lediglich der Verdeutlichung halber ist in der Figur 3 gestrichelt die Grenzlinie des Zentralkörpers 2 eingezeichnet, um zu zeigen, dass sich der Zentralkörper 2 in Richtung jedes Armes 3 in einen Fortsatz 9 fortsetzt. Die Aussenfläche des Fortsatzes 9 geht fluchtend in die Aussenfläche des Zentralkörpers 2 über.

Der Fortsatz 9 bildet eine Stufe 12 aus. Die Breite der Stufe 12 entspricht etwa der Materialstärke des Rohres, so dass der Arm 3 zwar mit geringem Bewegungsspiel in die Öffnung des Rohres 1 einsteckbar ist, gleichzeitig aber sichergestellt ist, dass die Aussenwandungen des Rohres 1 fluchtend in die Wandungen des Fortsatzes 9 übergehen. Die Aussenumrisskontur des Fortsatzes 9 sowie des Zentralkörpers 2 entspricht deshalb der Aussenumrisskontur des Rohres 1, so dass die Aussenwandung des Rohres 1 fluchtend in die Aussenwandung des Fortsatzbereiches 9 übergeht. Es bleibt lediglich eine geringe Stossfuge.

Der Grundkörper 8 des in den Figuren 1 bis 4 dargestellten ersten Ausführungsbeispiels besitzt einstückig mit dem Zentralkörper 2 verbundene Spannsegmente 4, die zwei zueinander parallel verlaufende Wände 4' und einen die beiden Wände miteinander verbindenden Boden 4" ausbilden. Es entsteht so ein U-förmiger Schacht. Dieser Schacht besitzt insgesamt die Form eines L, nämlich die eines rechten Winkels mit gleich langen Schenkeln.

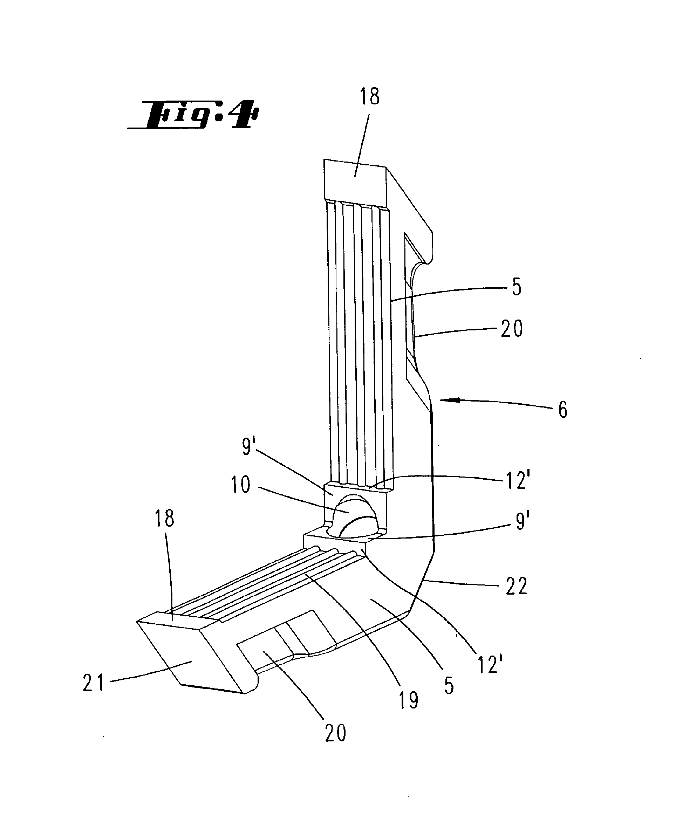

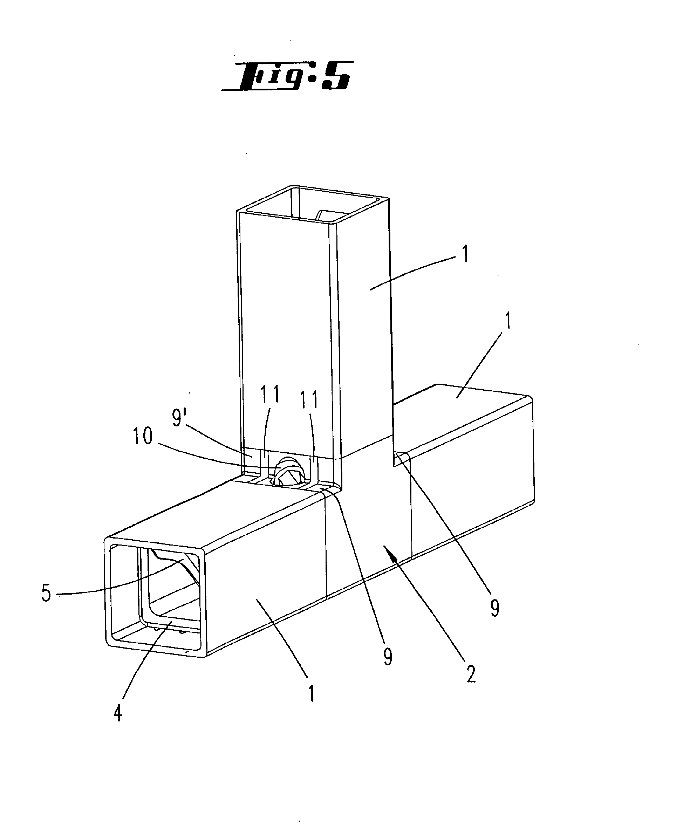

Wie der Figur 2 zu entnehmen ist, liegt in dem Schacht ein L-förmiger Spannkörper 6 ein. Die beiden rechtwinklig zueinander stehenden Spannsegmente 5 des Spannkörpers 6 bilden zu den beiden Wänden 4' einen kleinen Spalt 11. Im Bereich des eingeschlossenen Winkels des Rohrverbinders können diese beiden Spalten 11 bei in Rohröffnungen eingesteckten Armen 3 noch sichtbar sein.

Auch der L-förmige Spannkörper 6 besitzt einen Fortsatzbereich 9', der sich zu jedem seiner beiden Spannsegmente 5 erstreckt. Auch diese Fortsätze 9' bilden Stufen 12' aus, die sich an die Randkante der Mündung des Rohres anlegen können.

Die freien Enden eines jeden beweglichen Spannsegmentes 5 bilden mit geringfügigem Vorsprung Spannbacken 18 aus, die sich im verspannten Zustand gegen die Innenwandung des Rohres 1 abstützen. Im Bereich zwischen der Stufe 12' und den Spannbacken 18 besitzt das Spannsegment 5 mehrere in Erstrekkungsrichtung verlaufende Rippen 19. Die Scheitel der Rippen 19 liegen tiefer als die Stufe 12' bzw. die Spannbacke 18.

Im Scheitelbereich der beiden Fortsätze 9' des Spannkörpers 6 befindet sich eine Gewindebohrung 10. Die Gewindebohrung 10 erstreckt sich in Richtung der Winkelhalbierenden der beiden Spannsegmente 5. Die beiden Spannsegmente 5 sind gleich lang und stehen im rechten Winkel zueinander. Dementsprechend besitzt die Einschraubrichtung einen 45°-Winkel zu jedem der beiden Spannsegmente 5.

Insgesamt besitzt jedes Spannsegment 5 einen im Wesentlichen rechteckigen bzw. quadratischen Querschnitt. Lediglich im Bereich nahe des freien Endes, dessen Stirnfläche 21 geneigt ist, besitzt jedes Spannsegment 5 auf jeder Seite rückwärtig eine Ausnehmung 20.

Die Öffnung 10 mündet auf der rückwärtigen Seite des Spannkörpers 6 im Bereich einer im Wesentlichen quer zur Erstreckungsrichtung der Öffnung 10 sich erstreckenden Rückfläche 22.

Grundkörper 8 sowie Spannkörper 6 können aus jedem geeigneten Material hergestellt werden. Bevorzugt sind jedoch Metall oder Kunststoff. Bevorzugtes Fertigungsverfahren ist das Spitzgussverfahren.

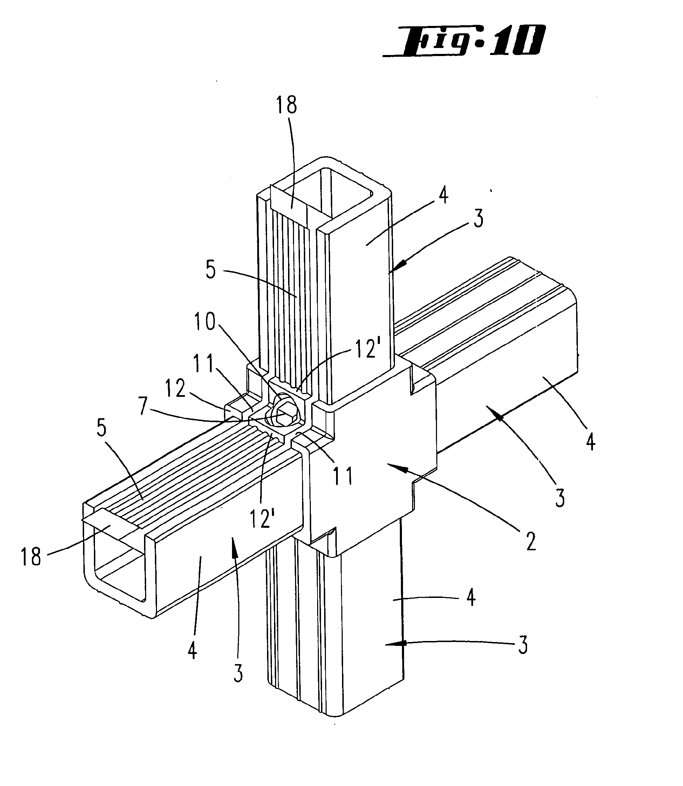

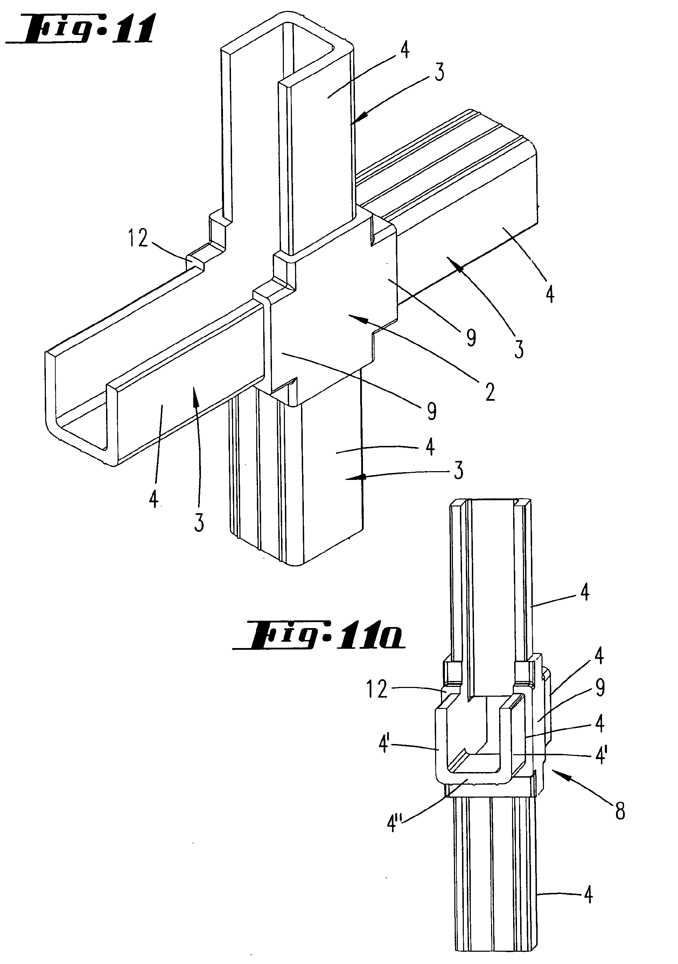

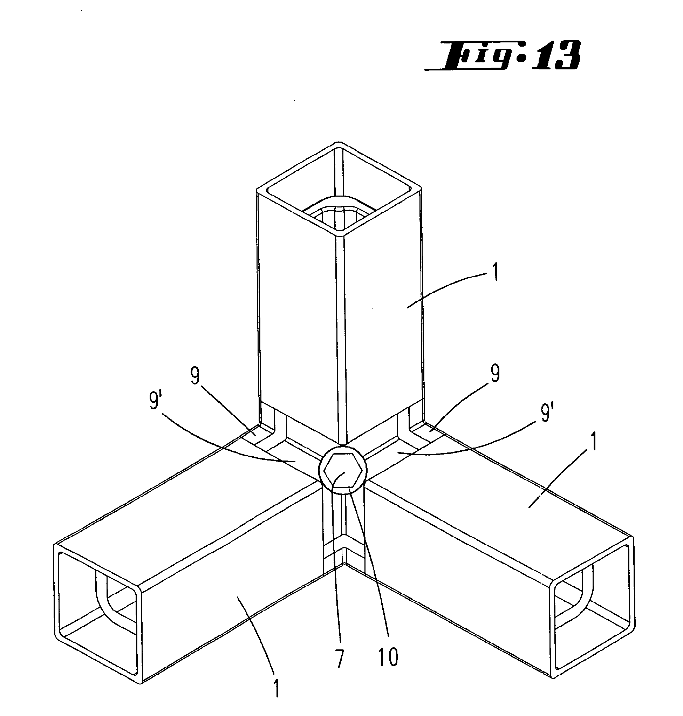

Bei dem in den Figuren 5 bis 8 dargestellten Ausführungsbeispiel besitzt der Grundkörper 8 eine längs gestreckte Form. Er bildet zwei in einem 180°-Winkel zueinander stehende Spannsegmente 4 aus, die ebenfalls eine U-förmige Querschnittskontur aufweisen. Zwischen den beiden Spannsegmenten 4 befindet sich im Bereich des Zentralkörpers im Innern des U-förmigen Schachtes eine dachförmige Struktur, die zwei Widerlager 14 ausbildet für jeweils einen Spannkörper 6.

Auch hier setzt sich der Zentralkörper 2 in Richtung seiner Arme 3 in Fortsätze 9 fort, die die oben beschriebenen Eigenschaften aufweisen.

Der in den Figuren 5 bis 8 dargestellte Rohrverbinder dient zur T-förmigen Verbindung dreier Rohre 1. Während die beiden T-Schenkel von den oben erwähnten Spannsegmenten 4 ausgebildet werden, setzt sich der Zentralkörper 2 hin zum T-Steg zunächst in der oben beschriebenen Weise als Fortsatz 9 fort und bildet eine Stufe 12 aus. Dort setzt sich der Grundkörper 8 in einen Zentriervorsprung 13 fort. Dieser Zentriervorsprung 13, der jeweils auf zwei einander gegenüberliegenden Seiten vorgesehen ist, erstreckt sich nur ein wenig in die Öffnung des Rohres 1, so dass das Rohr 1 auf der Stufe 12 zentriert wird.

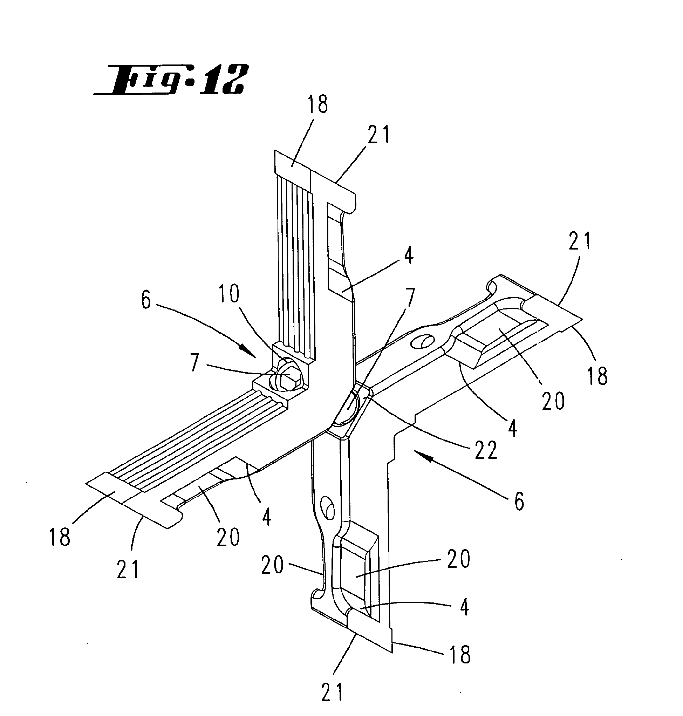

Wie in der Figur 7 dargestellt, besitzt das zweite Ausführungsbeispiel zwei L-förmige Spannkörper 6, die im Wesentlichen eine Ausgestaltung besitzen, wie die weiter oben zum ersten Ausführungsbeispiel beschriebenen Spannkörper 6. Wesentlich ist hier aber, dass jeweils ein Spannsegment 5 eines der beiden Spannkörper 6 Rücken an Rücken zu dem jeweils anderen Spannsegment 5 liegt. Hierzu besitzen die der Spannbacke 18 abgewandten Seiten eines jeden Spannsegmentes 5 über die gesamte Erstreckung verlaufende Ausnehmungen 20. Die Spannsegmente 5 erhalten dadurch ein L-förmiges Querschnittsprofil. Diese L-förmigen Querschnittsprofile können im Bereich des T-Steges ineinander greifen.

Auch hier besitzt jeder Spannkörper 6 im Zwickel zwischen den beiden Schenkeln eine in Richtung der Winkelhalbierenden verlaufende Öffnung 10 zum Einschrauben eines Spannelementes 7. Wie auch beim ersten Ausführungsbeispiel ist das Spannelement 7 als Madenschraube ausgebildet, die eine Sechskantöffnung aufweist, in welche ein Sechskantschlüssel einsteckbar ist, um die Madenschraube gegen das Widerlager 14 zu drehen.

Die Randöffnung der Gewindebohrung 10 liegt dabei zwischen den beiden Kanten der beiden Stufen 12,12'. Bei diesem Ausführungsbeispiel werden zwei Arme 3 des Rohrverbinders von jeweils einem festen Spannsegment 4 und einem beweglichen Spannsegment 5 ausgebildet. Der dritte Arm 3 des Rohrverbinders wird bei diesem Ausführungsbeispiel von zwei beweglichen Spannsegmenten 5 ausgebildet. Zur Verbindung des Rohrverbinders mit den zugeordneten Rohren müssen beide Spannkörper getrennt voneinander durch Betätigen des jeweiligen Spannelementes 7 in eine Spannstellung gebracht werden. Es ist aber auch möglich, dass nur ein einziges Spannelement 7 vorgesehen ist. Dieses wirkt dann mit beiden Spannkörpern 6 gleichzeitig zusammen. Auch hier kann das Spannelement 7 eine Madenschraube ausbilden. Durch geeignete Kraftumlenkungsmittel im Inneren des U-Schachtes des Grundkörpers 8 kann die Kraftumlenkung in den jeweils anderen Spannkörper 6 gewährleistet werden.

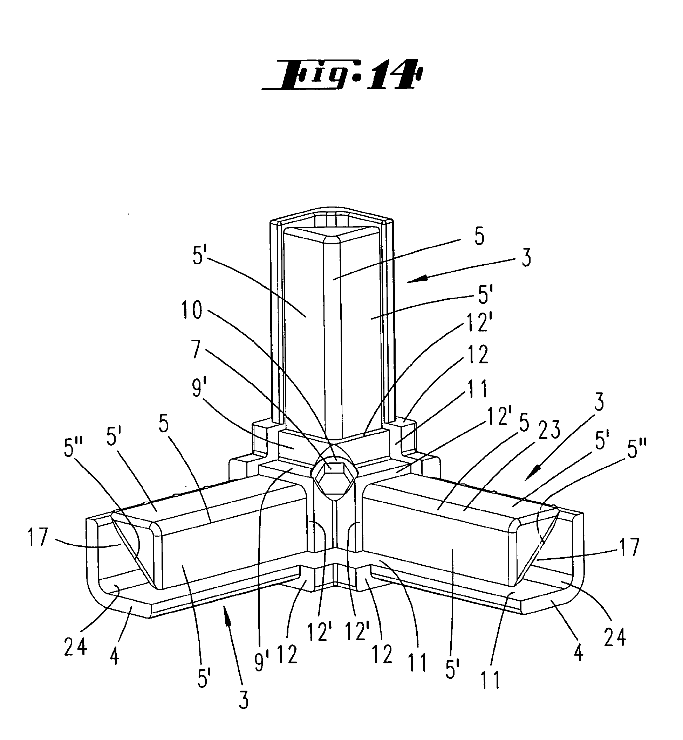

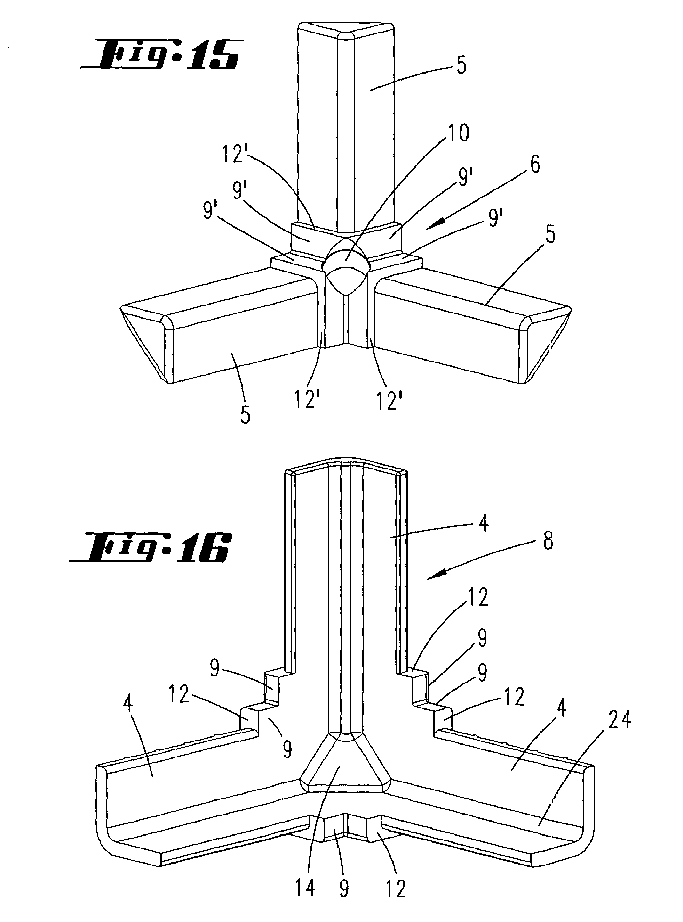

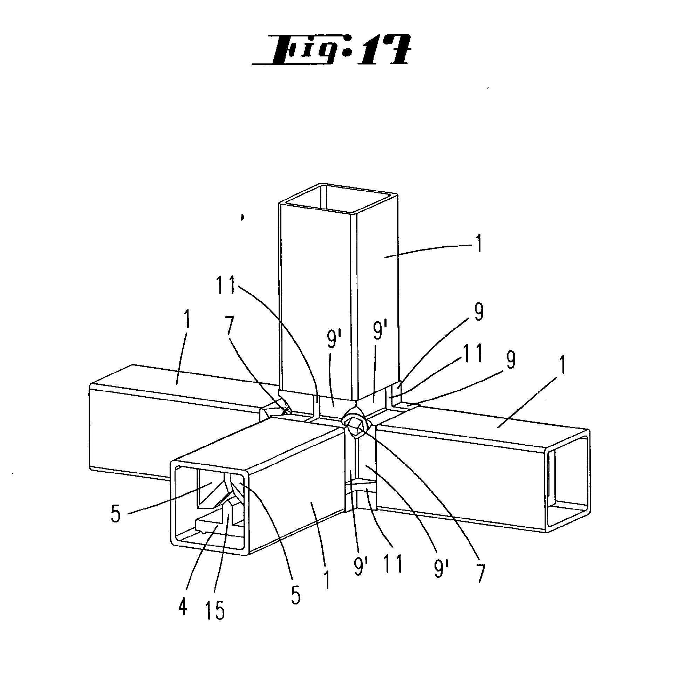

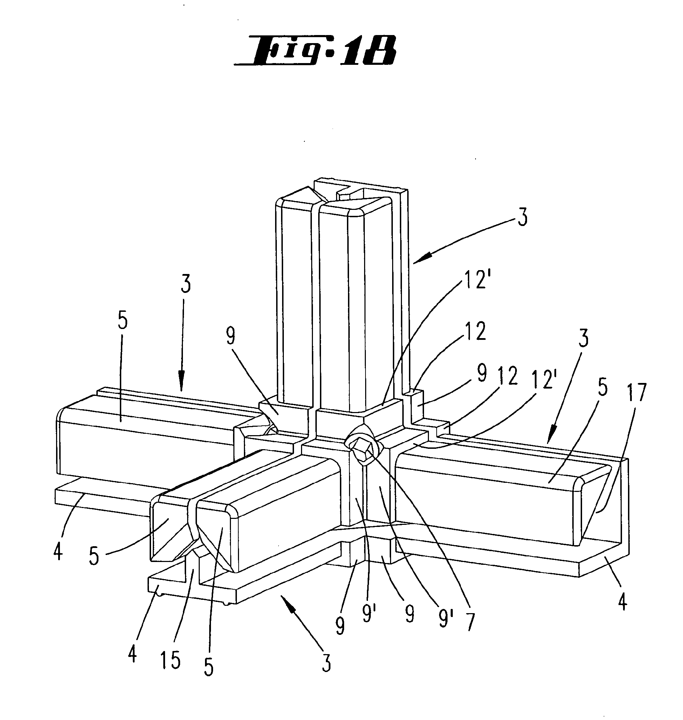

Bei dem in den Figuren 9 bis 12 dargestellten dritten Ausführungsbeispiel besitzt der Rohrverbinder insgesamt vier in einer Ebene liegende Arme. Auch hier sind zwei Spannkörper 6 vorgesehen, die jeweils eine L-förmige Gestalt haben. Diese liegen jedoch nicht Rücken an Rücken, sondern derart zueinander, dass sich das Spannelement 7 gegen ein entsprechendes Widerlager der Rückfläche 22 des anderen Spannkörpers 6 abstützen kann. Im Wesentlichen entspricht die Gestalt beider Spannkörper 6 derjenigen des ersten Ausführungsbeispiels. In montierter Stellung bilden die Spannsegmente 5 der beiden Spannkörper 6 ein X aus. Die beiden Rückflächen 22 der beiden X-förmig zueinander stehenden Spannkörper 6 verlaufen parallel zueinander, so dass nur ein Spannelement 7 erforderlich ist. Dieses Spannelement 7 kann sich dann auf einer entsprechenden Widerlagerfläche der Rückfläche 22 des jeweils anderen Spannkörpers 6 abstützen. Es ist aber auch möglich, beide Spannkörper 6 mit jeweils einem Spannelement 7 zu versehen, so dass eine Verspannung von beiden Seiten her möglich ist. Die beiden Madenschrauben 7 können sich dann gegeneinander abstützen. Die beiden Madenschrauben 7 müssen sich dabei nicht unmittelbar gegeneinander abstützen. Es ist auch möglich, dass zwischen den beiden Madenschrauben ein Druckübertragungsstück vorgesehen ist, welches beweglich ist. Alternativ dazu besteht aber auch die Möglichkeit, dass sich jedes der Spannelemente 7 an einem Widerlager 14 des Grundkörpers 8 abstützt, so dass die Aufbringung der Spannung individuell auf jeweils zwei Paare von Armen möglich ist.

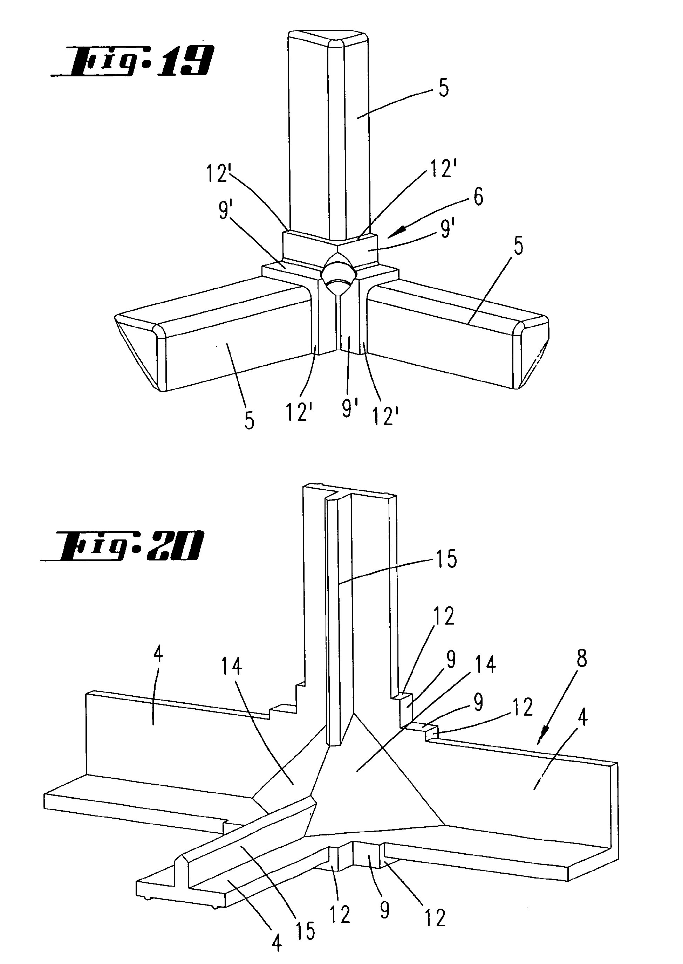

Das in den Figuren 13 bis 16 dargestellte vierte Ausführungsbeispiel unterscheidet sich von den zuvor erörterten Ausführungsbeispielen dadurch, dass die Öffnung 10 zur Aufnahme des Spannelementes 7 zwar ebenfalls im Innenschenkelbereich zweier Arme 3 angeordnet, aber nicht im Bereich einer Kante, sondern im Bereich einer Ecke angeordnet ist. Das in den Figuren 13 bis 16 dargestellte Ausführungsbeispiel hat die Gestalt eines Dreibeins. Alle drei Arme 3 stehen senkrecht aufeinander.

Wie der Figur 16 zu entnehmen ist, bildet der Grundkörper 8 drei senkrecht zueinander stehende Spannsegmente 4 aus, die jeweils im Querschnitt L-förmig ausgebildet sind, so dass sie L-Schalen ausbilden. Auch hier besitzt die L-Form zwei im Wesentlichen gleich lange Schenkel, die senkrecht aufeinander stehen. Im Zentralbereich der drei Spannsegmente 4 ist eine Widerlagerfläche 14 vorgesehen. Ansonsten bildet der Grundkörper 8 die oben bereits erörterten Fortsätze 9 und Stufen 12 aus.

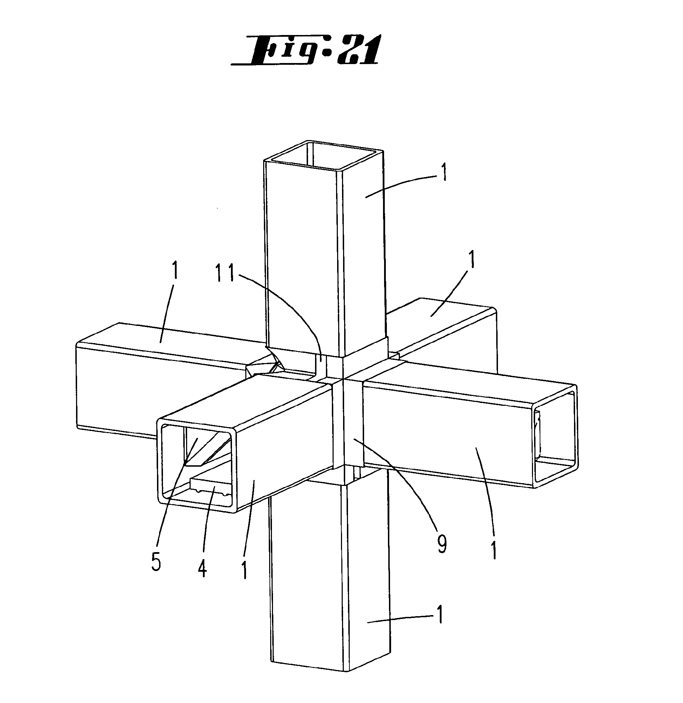

Der in der Figur 15 dargestellte Spannkörper 6 besitzt drei Spannsegmente 5, die ebenfalls von Fortsätzen 9' ausgebildete Stufen 12' besitzen. Die Spannsegmente 5 besitzen eine dreieckförmige Querschnittsgestalt. Es handelt sich um ein rechtwinkliges Dreieck mit gleich langen Katheten. Die beiden Kathetenflächen 5' bilden Spannflächen und gehen unter Ausbildung einer Rundung 23 ineinander über. Die sich diagonal zum Arm 3 erstreckende Hypothenuse bildet eine Basisfläche 5" aus, die dem Scheitel 24 des Spannsegmentes 4 gegenüberliegt. Der Scheitel 24 und die Basisfläche 5" bilden einen dreieckigen Freiraum aus.

Bei diesem Ausführungsbeispiel tangiert die Kante der Stufe 12' die Öffnung 10.

Bei dem in den Figuren 17 bis 20 dargestellten fünften Ausführungsbeispiel sind dem Grundkörper 8 zwei Spannkörper 6 zugeordnet, die die Gestalt eines Dreibeins besitzen und die bereits zum vierten Ausführungsbeispiel im Detail erörtert wurden. Hier besitzen zwei Arme 3 jeweils T-förmig ausgebildete feste Spannsegmente. Die den T-Steg bildende Rippe 15 besitzt dabei eine dachförmige Schmalseite. Diese Arme 3 besitzen darüber hinaus zwei bewegliche Spannsegmente 5, die jeweils einem anderen Spannkörper 6 zugeordnet sind. Auch bei diesem Ausführungsbeispiel befindet sich in der Innenkante der schalenförmigen Spannsegmente 4 eine Widerlagerfläche 14, die senkrecht zur Erstreckungsrichtung der Einschraubrichtung des Spannelementes 7 ausgerichtet ist. Die beiden jeweils im Querschnitt eine T-Form ausbildenden Spannsegmente 4 liegen in einem rechten Winkel zueinander. Rechtwinklig dazu erstrekken sich Spannsegmente 4 mit einem L-förmigen Querschnitt. Die beiden jeweils einen L-Querschnitt aufweisenden Spannsegmente 4 liegen in einer 180°-Winkelstellung zueinander. Bei diesem Ausführungsbeispiel sind zwei Spannelemente 7 vorgesehen, die in gegenseitiger Abstimmung betätigt werden müssen, damit gleichzeitig alle Spannsegmente aller Arme ihre Spannstellung einnehmen können. Es ist aber auch möglich, zunächst nur einen Spannkörper 6 vorzuspannen und dann den jeweils anderen Spannkörper nachzuspannen. In zwei Armen 3 wird die Spannung von insgesamt drei Spannsegmenten 4, 5, erzielt, wobei zwei bewegliche Spannsegmente 5 vorgesehen sind.

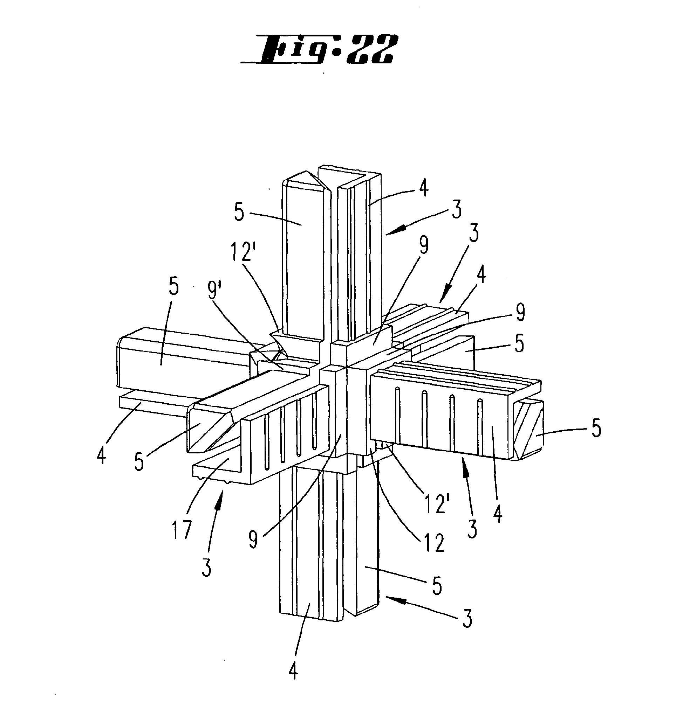

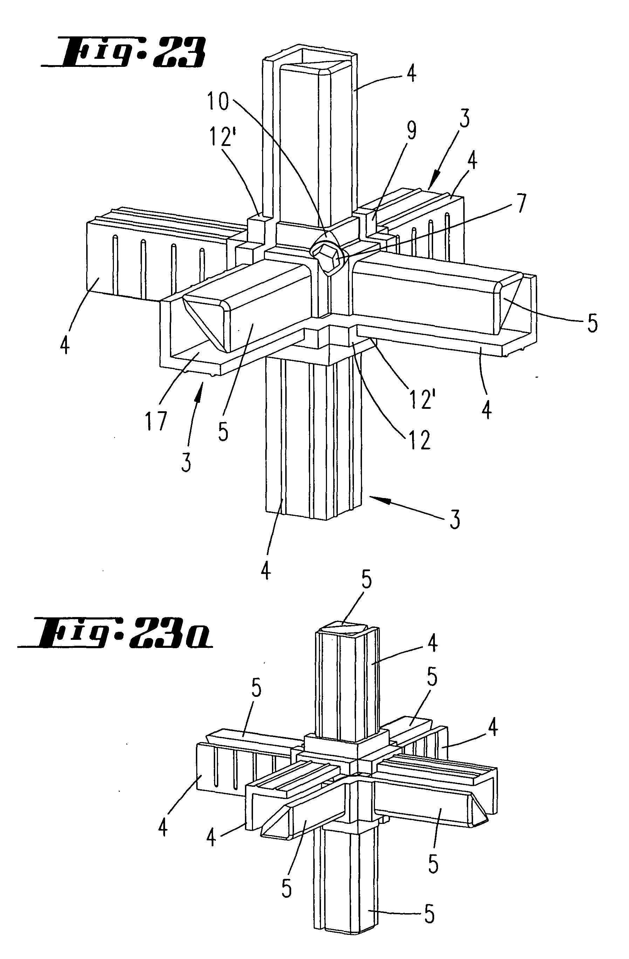

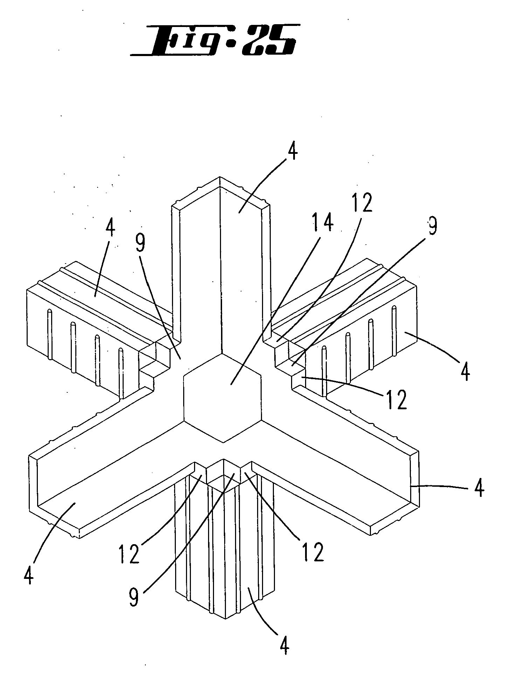

Bei dem sechsten, in den Figuren 21 bis 25 dargestellten Ausführungsbeispiel verbindet der Rohrverbinder insgesamt sechs Rohre miteinander. Von dem Zentralkörper 2 ragen insgesamt sechs Fortsätze 9, 9' ab, die jeweils Stufen 12, 12' ausbilden. Dabei bildet jeder Fortsatz 9 die Wurzel eines einen L-Querschnitt aufweisenden Spannsegmentes 4 aus, auf dessen Aussenoberfläche Rippen angeordnet sind.

Parallel zu diesen Spannsegmenten 4 erstrecken sich bewegliche Spannsegmente 5, die insgesamt zwei Spannkörpern 6 zugeordnet sind, wie sie betreffend das vierte Ausführungsbeispiel bereits beschrieben worden sind. Diese Spannsegmente 5 besitzen einen dreieckigen Querschnitt. Auf der Aussenfläche dieser beweglichen Spannsegmente 5 können sich ebenfalls Rippen befinden.

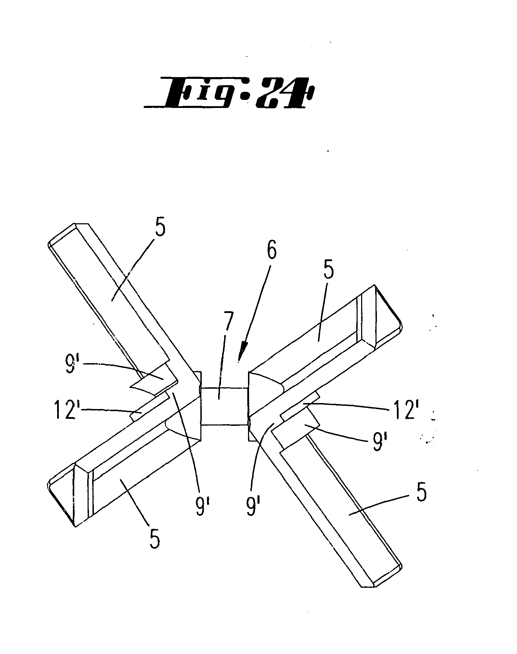

Bei diesem Ausführungsbeispiel können sich die beiden Spannkörper 6, wie in der Figur 24 dargestellt ist, gegeneinander mit einem Spannelement 7 in Form einer Schraube abstützen. Es ist aber auch möglich, jeweils eine Widerlagerfläche 14 dem Grundkörper 8 zuzuordnen, gegen welche sich individuell ein Spannelement 7 eines jeden Spannkörpers 6 abstützen kann.

### Die Funktionsweise aller Ausführungsbeispiele ist die folgende:

Das Spannelement 7 wird in eine gelöste Stellung gedreht, indem die das Spannelement 7 bildende Madenschraube mit einem geeigneten Schraubwerkzeug aus ihrer Gewindebohrung 10 etwas herausgeschraubt wird. Dann werden die jeweils von mindestens zwei Spannsegmenten 4, 5 ausgebildeten Arme 3 in die Rohre 1 eingesteckt, bis die Stirnkanten der Rohre 1 gegen die Stufen 12, 12' treten. Sodann wird mittelst eines geeigneten Werkzeuges das Spannelement 7 betätigt. Wird das Spannelement 7 von einer Madenschraube ausgebildet, so wird diese mittelst eines Schraubendrehers gedreht. Dabei beabstandet sich der Spannkörper 6 entweder von seinem gegenüberliegenden Spannkörper 6 oder vom Grundkörper 8. Dabei treten die Spannbacken 18 gegen die Innenwandung der Rohre 1. Bei den als Dreibein gestalteten Spannkörpern 6 treten die Spannflächen 5' in Flächenanlage zu den Innenwandungen der Rohre. Es ergeben sich hier prismatische Spannflächen. Bei den L-förmigen Spannkörpern sind es die im Bereich der freien Ende der Spannsegmente 5 vorspringenden Spannbacken 18, die in eine Flächenanlage an die Innenwandung des Rohres 1 treten.

Das Spannelement 7 wird solange betätigt, bis die erforderliche Spannkraft aufgebracht ist. Wesentlich ist, dass die Rohre im Wesentlichen kraftfrei mit den Rohrverbindern verbunden werden können und eine rundum verlaufende Stufe 12,12' gegeben ist, an die sich die Randkante des Rohres anlegen kann, so dass keine Randausnehmungen im Bereich des Rohres erforderlich sind. Zufolge der Fortsätze ist gewährleistet, dass sich die Aussenoberfläche des Rohres nahezu störungsfrei in die Aussenoberfläche des Rohrverbinders fortsetzt. Lediglich die Spalte 11 zwischen den Spannsegmenten 4, 5 bzw. die Öffnung 10 zur Aufnahme des Spannelementes 7 sind sichtbar.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Rohrverbinder zur rechtwinkligen Verbindung von Rohren (1), welcher einen Zentralkörper (2) sowie mindestens zwei Arme (3) aufweist, so dass benachbarte Arme (3) im rechten Winkel zueinander von diesem abragen, und jeder Arm (3) in Längsrichtung geteilt ist in ein erstes, insbesondere festes und ein zweites, insbesondere bewegliches Spannsegment (4, 5) derart, dass der Arm in ein Rohr (1) einsteckbar und die Spannsegmente (4, 5) dort in der Art von Spannbacken verklemmbar sind, die ersten Spannsegmente (4) einstückig und materialeinheitlich mit Teilen des Zentralkörpers (2) zu einem Grundkörper (8) verbunden sind, und die zweiten Spannsegmente (5) von zwei oder drei benachbarten Armen sowie eventuell mit Teilen des Zentralkörpers (2) einstückig und materialeinheitlich zu einem Spannkörper (6) verbunden sind und der Spannkörper (6) durch ein Spannelement (7) gegen den Grundkörper (8) verspannbar ist, wobei jeder Arm (3) einen Fortsatzbereich (9, 9') aufweist, welcher sich über beide Spannsegmente (4, 5) erstreckt und mindestens ein Spannkörper (6) im Fortsatzbereich eine Öffnung (10) aufweist, in welche ein Werkzeug für die Betätigung des Spannelementes (7) einführbar ist und die Aussenflächen des Fortsatzbereiches (9, 9') bis auf Spalten zwischen den Spannsegmenten (4, 5) oder der Betätigungsöffnung (10) die Aussenumrisskontur des Rohres (1) in dessen Längsrichtung fortsetzen.

2. Zwei oder mehr von einem Zentralkörper (2) in einem vorzugsweise rechten Winkel zueinander abragende Arme (3) aufweisender Rohrverbinder, wobei die Arme (3) in die Öffnungen von Rohren (1) einsteckbar und dort mittels Spannsegmenten (4, 5) durch Betätigen eines Spannelementes (7) verklemmbar sind, **dadurch gekennzeichnet, dass** das Spannelement (7) im Bereich des inneren Winkelschenkels zweier oder mehrerer Arme (3) angeordnet ist zur Verlagerung der diesen Armen zugeordneten Spannsegmente (4, 5) in die Klemmstellung.

3. Rohrverbinder nach einem oder mehreren der vorangehenden Ansprüche oder insbesondere danach, **dadurch gekennzeichnet, dass** jeder Arm (3) aus je einem Fortsatz (9, 9') des bevorzugt kubusförmigen Zentralkörpers (2) unter Ausbildung einer Stufe (12,12') entspringt.

4. Rohrverbinder nach einem oder mehreren der vorangehenden Ansprüche oder insbesondere danach, **dadurch gekennzeichnet, dass** die Aussenumrisskontur des Fortsatzes (9, 9') der Aussenumrisskontur des Rohres (1) entspricht.

5. Rohrverbinder nach einem oder mehreren der vorangehenden Ansprüche oder insbesondere danach, **dadurch gekennzeichnet, dass** die Aussenkontur des Zentralkörpers (2) zumindestens auf einem Teil seiner freien, nicht mit Armen (3) versehenen Seiten das Profil des Rohres (1) fortsetzt.

6. Rohrverbinder nach einem oder mehreren der vorangehenden Ansprüche oder insbesondere danach, **dadurch gekennzeichnet, dass** die Aussenkontur des Zentralkörpers (2) auf seinen freien, nicht mit Armen (3) versehenen Seiten in Teilflächen aufgeteilt ist, wobei jede Teilfläche das Profil des an die Teilfläche angrenzenden Rohres (1) fortsetzt.

7. Rohrverbinder nach einem oder mehreren der vorangehenden Ansprüche oder insbesondere danach, **dadurch gekennzeichnet, dass** die freien, nicht mit Armen (3) versehenen Seiten des Zentralkörpers (2) mit dem die festen Spannsegmente (4) aufweisenden Grundkörper (8) einstückig und materialeinheitlich verbunden sind.

8. Rohrverbinder nach einem oder mehreren der vorangehenden Ansprüche oder insbesondere danach, **dadurch gekennzeichnet, dass** der Zentralkörper (2) die Form eines Kubus hat, so dass die Rohre (1) und die Fortsatzbereiche (9, 9') eine quadratische Aussenkontur aufweisen.

9. Rohrverbinder nach einem oder mehreren der vorangehenden Ansprüche oder insbesondere danach, **dadurch gekennzeichnet, dass** das Spannelement (7) eine Madenschraube ist, die in einer sich entlang einer Winkelhalbierenden des von den beiden Armen (3) gebildeten Winkels erstreckenden Gewindebohrung (10) steckt, wobei der Öffnungsrand der Gewindebohrung zwischen den den Fortsatz (9') begrenzenden Kanten der Stufe (12') liegt.

10. Rohrverbinder nach einem oder mehreren der vorangehenden Ansprüche oder insbesondere danach, **dadurch gekennzeichnet, dass** die Weite der Öffnung (10) im montierten Zustand des Rohrverbinders so gross ist, dass ein Betätigungswerkzeug einführbar ist, wobei die Aussenkontur des Betätigungswerkzeuges vollständig zwischen den den Fortsatz (9') begrenzenden Kanten bzw. Ecken benachbarter Arme (3) liegt.

11. Rohrverbinder nach einem oder mehreren der vorangehenden Ansprüche oder insbesondere danach, **dadurch gekennzeichnet, dass** ein oder mehrere feste Spannsegmente (4) einen U-förmigen Schacht ausbilden, in welchem je ein bewegliches Spannsegment (5) einliegt, das von einem L-Schenkel (5) eines L-förmigen Spannkörpers (6) gebildet wird.

12. Rohrverbinder nach einem oder mehreren der vorangehenden Ansprüche oder insbesondere danach, **dadurch gekennzeichnet, dass** das Spannelement (7) in dem von den beiden L-Schenkeln gebildeten (5) Zwickel sitzt.

13. Rohrverbinder nach einem oder mehreren der vorangehenden Ansprüche oder insbesondere danach, **dadurch gekennzeichnet, dass** die L-Schenkel (5) im Wesentlichen ein quadratisches Profil besitzen und mit Abstand (11) zu den Schachtwänden (4') im Schacht einliegen.

14. Drei oder mehr von einem Zentralkörper (2) in einem vorzugsweise rechten Winkel zueinander abragende Arme (3) aufweisender Rohrverbinder, wobei die Arme (3) in die Öffnungen von Rohren (1) einsteckbar und dort mittels Spannsegmenten (4, 5) durch Betätigen eines Spannelementes (7) verklemmbar sind, **dadurch gekennzeichnet, dass** die Schenkel (5) eines dreischenkligen Spannkörpers (6) Spannsegmente ausbilden, die in L-förmigen Armschalen (4) einliegen und das Spannelement (7) im Kreuzungspunkt der Scheitellinien der einen dreischenkligen Querschnitt aufweisenden Spannsegmente (5) liegt.

15. Rohrverbinder nach einem oder mehreren der vorangehenden Ansprüche oder insbesondere danach, **gekennzeichnet durch** einen im Wesentlichen dreieckigen Querschnitt aufweisenden Freiraum (17) zwischen dem inneren Scheitel der Armschale (4) und einer Basisfläche (5") des im Querschnitt dreieckigen Spannsegmentes (5).

16. Rohrverbinder nach einem oder mehreren der vorangehenden Ansprüche oder insbesondere danach, **dadurch gekennzeichnet, dass** das Spannsegment (5) zwei in einem rechten Winkel zueinander stehende Spannflächen (5') aufweist, die den Flächen der L-förmigen Armschale (4) gegenüberliegen.

17. Rohrverbinder nach einem oder mehreren der vorangehenden Ansprüche oder insbesondere danach, **dadurch gekennzeichnet, dass** sich die Spitze der das Spannelement (7) bildenden Madenschraube gegen ein im inneren Scheitel oder im inneren Eckbereich des Grundkörpers (8) angeordnetes Widerlager (14) abstützt.

18. Rohrverbinder nach einem oder mehreren der vorangehenden Ansprüche oder insbesondere danach, **dadurch gekennzeichnet, dass** mehrere Spannkörper (6) gegeneinander verspannt werden.

19. Rohrverbinder nach einem oder mehreren der vorangehenden Ansprüche oder insbesondere danach, **dadurch gekennzeichnet, dass** ein Spannkörper (6) das Widerlager für das Spannelement (7) eines Spannkörpers ausbildet.

20. Rohrverbinder nach einem oder mehreren der vorangehenden Ansprüche oder insbesondere danach, **gekennzeichnet durch** ein T-förmig ausgebildetes festes Spannsegment (4).

21. Rohrverbinder nach einem oder mehreren der vorangehenden Ansprüche oder insbesondere danach, **dadurch gekennzeichnet, dass** der dem im Querschnitt T-förmig ausgebildeten Spannsegment (4) zugeordnete Arm (3) zwei bewegliche Spannsegmente (5) aufweist, die jeweils zu einem anderen Spannkörper (6) zugehörig sind.

22. Rohrverbinder nach einem oder mehreren der vorangehenden Ansprüche oder insbesondere danach, **dadurch gekennzeichnet, dass** die beiden Spannsegmente (5) eines L-förmigen Spannkörpers (6) endseitig in Spannrichtung vortretende Spannbacken (18) ausbilden.

23. System nach Art eines Bausatzes aus Rohren (1) und Rohrverbindern insbesondere gemäß einem oder mehreren der vorhergehenden Ansprüche, welche mindestens zwei Arme mit Fortsatzbereichen (9, 9') und Klemmbereichen (4, 5) aufweisen, wobei die Aussenkontur der Fortsatzbereiche (9, 9') die Aussenkontur der angesetzten Rohre (1) in deren Längsrichtung fortsetzt und die lediglich durch glatte Schnitte quer zur Längsachse abgelängten Rohre (1) auf Stoss an die Fortsatzbereiche der Verbinder ansetzbar und die Klemmbereiche (4, 5) mit diesen kraftschlüssig verbindbar sind.

24. System nach Anspruch 23 oder insbesondere danach, **dadurch gekennzeichnet, dass** ein Betätigungswerkzeug zur Betätigung eines Spannelementes (7) vollständig innerhalb der Aussenkontur der Fortsatzbereiche (9, 9') durch eine Betätigungsöffnung (10) in die Rohrverbinder einführbar ist.
